# EUROPEAN PATENT APPLICATION

(11) **EP 4 760 900 A1**
(43) Date of publication of application: **17.06.2026**
(21) Application number: 25768547.9
(22) Date of filing: 27.02.2025
(51) Int. Cl.: H01M 50/183, H01M 50/367, H01M 50/342, H01M 10/04

(54) **SECONDARY BATTERY AND METHOD FOR MANUFACTURING SECONDARY BATTERY**

(30) Priority: 05.03.2024 KR 20240031381
(71) Applicant: LG Energy Solution, Ltd., Seoul 07335 (KR)
(72) Inventor: PARK, Hyeon Uk, Daejeon 34122 (KR)
(74) Representative: Goddar, Heinz J.
(86) International application number: PCT/KR2025/002757
(87) International publication number: WO 2025/188023

(57) **Abstract**

A secondary battery according to the present invention comprises: an electrode assembly; and a battery case including an accommodation portion, which accommodates the electrode assembly together with an electrolyte, and a side portion, which extends from the accommodation portion. The side portion includes: a cut section formed adjacent to the end of the side portion to discharge gas from the inside of the accommodation portion; and a plurality of sealing sections arranged between the cut section and the accommodation portion to prevent the electrolyte from moving toward the cut section while gas is being discharged through the cut section. The plurality of sealing sections have gas discharge flow paths formed between the respective sealing sections to discharge the gas, and include inflow prevention sections which are located adjacent to inlets of the gas discharge flow paths and extend toward the accommodation portion to prevent the electrolyte from flowing into the gas discharge flow paths.

## Description

### TECHNICAL FIELD

### CROSS-REFERENCE TO RELATED APPLICATIONS

This application is based on and claims priority from Korean Patent Application No. 10-2024-0031381, filed on March 5, 2024, with the Korean Intellectual Property Office, the disclosure of which is incorporated herein in its entirety by reference.

### TECHNICAL FIELD

The present disclosure relates to a secondary battery and a method for manufacturing a secondary battery. More specifically, the present disclosure relates to a secondary battery requiring the discharge of gas and a method for manufacturing the secondary battery.

### BACKGROUND ART

As the technology development and demand for electric vehicles, mobile devices, and the like increase, the demand for secondary batteries as an energy source is increasing. Unlike primary batteries, secondary batteries are reusable batteries that can be recharged after a single use. Secondary batteries include a positive electrode and a negative electrode. When metal is oxidized at the positive electrode, electricity is generated by the movement of electrons released from the metal.

To manufacture such a secondary battery, an electrode active material slurry is first applied to a positive electrode current collector and a negative electrode current collector to manufacture a positive electrode and a negative electrode, and then an electrode assembly is formed by stacking them on both sides of a separator. And, the electrode assembly is accommodated in a battery case, and an electrolyte is injected and then sealed.

Secondary batteries are classified into pouch type, can type, and the like depending on the material of the case accommodating the electrode assembly. Pouch-type secondary batteries are formed by accommodating the electrode assembly in a pouch made of a flexible polymer material. And, can-type secondary batteries are formed by accommodating the electrode assembly in a case made of a material such as metal or plastic.

The pouch, which is a battery case of pouch-type secondary batteries, is manufactured by performing press processing on a flexible pouch film to form a receiving portion. Once the receiving portion is formed, the electrode assembly is accommodated in the electrode receiving space of the receiving portion, and a side portion extending from the receiving portion is fused to seal the pouch.

Before fusing the side portion, an activation process of test charging and/or discharging the secondary battery may be performed. During the activation process, the electrode assembly within the receiving portion may react with the electrolyte to generate gas. To discharge the gas formed during the activation process to the outside of the battery case, a portion of the side portion may be cut or punched to form a cut portion. However, in this case, while the gas is discharged toward the cut portion, it is necessary to prevent the electrolyte from being discharged through the cut portion. This is because reduction of the electrolyte may decrease the capacity of the secondary battery.

### SUMMARY

### TECHNICAL PROBLEM

The present disclosure is designed to solve the above-described problems, and therefore the present disclosure is directed to providing a secondary battery configured to prevent the discharge of an electrolyte during a degassing process.

Technical problems to be solved by the present disclosure are not limited to the above-described problems, and other problems not mentioned herein may be clearly understood by those having ordinary skill in the art from the following description of the present disclosure.

### TECHNICAL SOLUTION

A secondary battery according to an embodiment of the present disclosure includes an electrode assembly; and a battery case including a receiving portion that accommodates the electrode assembly together with an electrolyte and a side portion that extends from the receiving portion, wherein the side portion includes a cut portion formed adjacent to an end of the side portion to discharge gas within the receiving portion; and a plurality of sealing portions positioned between the cut portion and the receiving portion to prevent the electrolyte from moving to the cut portion while the gas is discharged to the cut portion, wherein the plurality of sealing portions include a gas discharge flow path formed between each of the sealing portions to allow the gas to be discharged, and an inflow prevention portion positioned adjacent to an inlet of the gas discharge flow path and extending toward the receiving portion to prevent the electrolyte from flowing into the gas discharge flow path.

Each of the plurality of sealing portions may include a sealing portion body that supports the inflow prevention portion and forms a concave guide space in a direction away from the receiving portion to guide the electrolyte together with the inflow prevention portion.

The plurality of sealing portions may be arranged in a direction parallel to a long side of the receiving portion.

The inflow prevention portion may have an inclined surface inclined in a direction away from the receiving portion with respect to a direction away from the gas discharge flow path.

The plurality of sealing portions may be formed by fusing the side portion.

The gas discharge flow path may extend from the inlet to an outlet with at least one change of direction in a different direction.

The gas discharge flow path may include an inlet flow path extending in a first extension direction from the inlet close to the receiving portion; and a bent flow path extending in a second extension direction different from the first extension direction from the inlet flow path to prevent the electrolyte from moving.

The inlet flow path may extend perpendicular to the arrangement direction of the plurality of sealing portions.

The gas discharge flow path may further include an outlet flow path extending in a third extension direction different from the second extension direction from the outlet positioned on the opposite side of the inlet.

The outlet flow path may be connected to the bent flow path.

A cross-sectional area of the outlet flow path may be smaller than a cross-sectional area of the flow path that is formed in the cut portion and through which the gas is discharged.

The outlet may be adjacent to the cut portion.

The cut portions may be provided in plurality, and the gas discharge flow paths may be provided in plurality to correspond to each of the plurality of cut portions.

A part of the gas discharge flow path adjacent to the outlet may have a larger cross-sectional area as the part moves toward the outlet.

A part of the gas discharge flow path adjacent to the inlet may have a smaller cross-sectional area as the part goes away from the inlet.

A secondary battery according to an embodiment of the present disclosure includes an electrode assembly; and a battery case including a receiving portion that accommodates the electrode assembly together with an electrolyte and a side portion that extends from the receiving portion, wherein the side portion includes a cut portion formed adjacent to an end of the side portion to discharge gas within the receiving portion; and a plurality of sealing portions positioned between the cut portion and the receiving portion to prevent the electrolyte from moving to the cut portion while the gas is discharged to the cut portion, wherein the plurality of sealing portions include a gas discharge flow path formed between each of the sealing portions to allow the gas to be discharged, and the gas discharge flow path extends from the inlet to an outlet with at least one change of direction in a different direction.

The plurality of sealing portions may include an inflow prevention portion positioned adjacent to an inlet of the gas discharge flow path and extending toward the receiving portion to prevent the electrolyte from flowing into the gas discharge flow path.

Each of the plurality of sealing portions may include a sealing portion body that supports the inflow prevention portion and forms a concave guide space in a direction away from the receiving portion to guide the electrolyte together with the inflow prevention portion.

The plurality of sealing portions may be arranged in a direction parallel to a long side of the receiving portion.

A method for manufacturing a secondary battery according to an embodiment of the present disclosure includes a step of sealing a lead sealing portion of a side portion of a battery case positioned on the outside of an electrode assembly; a step of forming a cut portion adjacent to an end of the side portion; a step of forming a plurality of sealing portions that are positioned between the cut portion and the receiving portion of the battery case and allow a gas discharge flow path to be formed therebetween; and a step of discharging gas generated by activating the electrode assembly to the cut portion through the gas discharge flow path, and further includes a step of forming an inflow prevention portion positioned adjacent to an inlet of the gas discharge flow path and protruding toward the receiving portion to prevent the electrolyte from flowing into the gas discharge flow path by fusing the side portion, in the plurality of sealing portions.

### ADVANTAGEOUS EFFECTS

The secondary battery according to the present disclosure may include a plurality of sealing portions that are positioned between the cut portion and the receiving portion and include the gas discharge flow path formed between each of the sealing portions to allow the gas to be discharged, thereby preventing the discharge of the electrolyte during the degassing process.

The secondary battery according to the present disclosure may include a plurality of sealing portions including the inflow prevention portion positioned adjacent to the inlet of the gas discharge flow path and extending toward the receiving portion to prevent the electrolyte from flowing into the gas discharge flow path, thereby preventing the discharge of the electrolyte.

The secondary battery according to the present disclosure may form the gas discharge flow path that extends from the inlet to the outlet with at least one change of direction in a different direction, thereby preventing the discharge of the electrolyte.

The effects to be obtained by the present disclosure are not limited to the effects mentioned above, and other effects not mentioned may be clearly understood by those having ordinary skill in the art from the following description of the present disclosure.

### BRIEF DESCRIPTION OF THE DRAWINGS

FIG. 1 is a perspective view of a secondary battery according to a first embodiment of the present disclosure.
FIG. 2 is an assembly view of the secondary battery illustrated in FIG. 1.
FIG. 3 is a plan view illustrating a portion of the battery case of the secondary battery illustrated in FIG. 2 after being fused, as viewed from above.
FIG. 4 is a plan view illustrating that a sealing portion is formed in the battery case of the secondary battery illustrated in FIG. 3.
FIG. 5 is an enlarged view illustrating part V of FIG. 4.
FIG. 6 is an enlarged view illustrating part VI of FIG. 4.
FIG. 7 is a flowchart regarding a method for manufacturing the secondary battery disclosed in FIG. 1.
FIG. 8 is an enlarged view of a secondary battery according to a second embodiment of the present disclosure.
FIG. 9 is an enlarged view of a secondary battery according to a third embodiment of the present disclosure.
FIG. 10 is an enlarged view of a secondary battery according to a fourth embodiment of the present disclosure.
FIG. 11 is an enlarged view of a secondary battery according to a fifth embodiment of the present disclosure.
FIG. 12 is an enlarged view of a secondary battery according to a sixth embodiment of the present disclosure.

### DETAILED DESCRIPTION

Hereinafter, preferred embodiments of the present disclosure will be described in detail with reference to the accompanying drawings to enable those having ordinary skill in the art to easily carry out the present disclosure. However, the present disclosure may be embodied in various different forms and is not limited or restricted by the following embodiments.

In order to clearly describe the present disclosure, detailed descriptions of portions unrelated to the present disclosure or known technologies that may unnecessarily obscure the gist of the present disclosure have been omitted. When assigning reference numerals to components in each drawing in this specification, the same or similar reference numerals are assigned to the same or similar components throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The various embodiments and terms used herein are not intended to limit the technical features described herein to any particular embodiment, and should be understood to include various modifications, equivalents, or substitutes of the corresponding embodiments.

In connection with the description of the drawings, similar reference numerals may be used for similar or related components.

The singular form of a noun corresponding to an item may include one or more of the items, unless the relevant context clearly indicates otherwise.

As used herein, each of the phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof.

The term "and/or" includes any combination of a plurality of related listed components, or any one of a plurality of related listed components.

Terms such as "first" or "second" may be used simply to distinguish one such component from another such component, and do not limit such components in any other respect (e.g., importance or order).

When a component (e.g., a first component) is referred to as "coupled" or "connected" to another component (e.g., a second component), with or without the terms "functionally" or "communicatively," it means that the component may be connected to the other component directly (e.g., wired), wirelessly, or through a third component.

The terms "include" or "have" are intended to designate the presence of features, numbers, steps, actions, components, parts, or combinations thereof described herein, and do not preclude the presence or addition of one or more other features, numbers, steps, actions, components, parts, or combinations thereof.

When a component is said to be "connected", "coupled", "supported" or "in contact" with another component, this includes not only cases where the components are directly connected, coupled, supported or in contact, but also cases where the components are indirectly connected, coupled, supported or in contact through a third component.

When a component is said to be positioned "on" another component, this includes not only cases where a component is in contact with another component, but also cases where another component exists between the two components.

Meanwhile, the terms "upper-lower direction", "lower side", and "front-back direction" used in the following description are defined based on the drawings, and the shape and position of each component are not limited by these terms.

Hereinafter, embodiments according to the present disclosure will be described in detail with reference to the accompanying drawings.

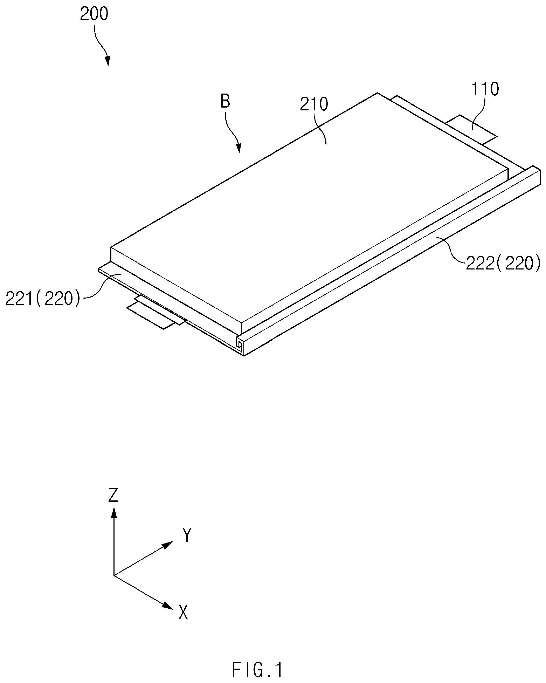

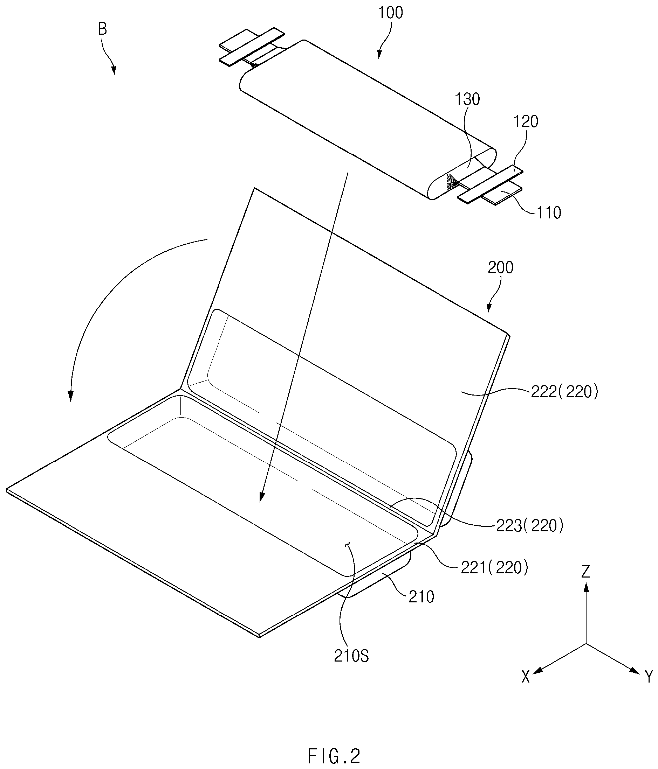

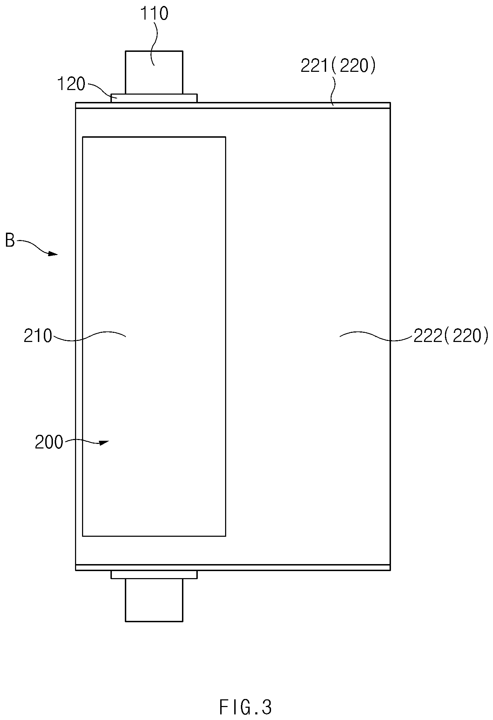

FIG. 1 is a perspective view of a secondary battery B according to a first embodiment of the present disclosure. FIG. 2 is an assembly view of the secondary battery B illustrated in FIG. 1. FIG. 3 is a plan view illustrating a portion of the battery case 200 of the secondary battery B illustrated in FIG. 2 after being fused, as viewed from above.

Referring to FIGS. 1 to 3, a secondary battery B according to a first embodiment of the present disclosure will be described.

As illustrated in FIG. 1, a secondary battery B configured to generate electricity may be provided. In the following description, the term "secondary battery B" may refer to a secondary battery B in a finished state where the process has been completed or may refer to a secondary battery B that is in the process. Therefore, the term "secondary battery B" in the present disclosure may be understood according to the context.

As illustrated in FIG. 2, the secondary battery B may include an electrode assembly 100. The electrode assembly 100 may be formed by alternately stacking electrodes and separators. First, a slurry obtained by mixing an electrode active material, a binder, and a plasticizer may be applied to a positive electrode current collector and a negative electrode current collector to manufacture electrodes such as a positive electrode and a negative electrode. And, separators are stacked between the electrodes to form an electrode assembly 100, and the electrode assembly 100 may be inserted into a battery case 200 and sealed after an electrolyte is injected. At this time, the battery case 200 may be, for example, in a pouch type. In the following description, the pouch or pouch-type battery case 200 may be considered to refer to the battery case 200 as an example of the battery case 200.

Specifically, the electrode assembly 100 may include two types of electrodes, a positive electrode and a negative electrode, and a separator interposed between the electrodes to insulate the electrodes from each other. This electrode assembly 100 may be provided in a stack type, a jelly-roll type, a stack and folding type, or the like, depending on the method in which the positive electrode, the negative electrode, and the separator are stacked. The two types of electrodes, that is, the positive electrode and the negative electrode, may have a structure in which an active material slurry is applied to an electrode current collector in the form of a metal foil or a metal mesh including aluminum and copper, respectively. The slurry may be typically formed by stirring a granular active material, an auxiliary conductor, a binder, and a plasticizer in a state where a solvent is added. The solvent may be removed from the slurry in a subsequent process.

More specifically, the positive electrode may include a positive electrode material having a strong oxidizing power that provides electrons. For example, the positive electrode material may include lithium ion-transition metal-oxygen. Nickel, cobalt, manganese, or the like may be used as the transition metal. The negative electrode may include a negative electrode material having a strong reducing power that accepts electrons. For example, the negative electrode material may include graphite. When the secondary battery B is charged and discharged, electrons may move according to the movement of lithium ions. In this case, lithium ions may be moved through an electrolyte positioned between the positive electrode and the negative electrode, and electrons may be moved through a conducting wire connecting the positive electrode and the negative electrode.

Electrode tabs 130 may be connected to the positive electrode and the negative electrode of the electrode assembly 100, respectively, and protrude outward from the electrode assembly 100 to serve as a path through which electrons may move between the inside and the outside of the electrode assembly 100. The plurality of electrode tabs 130 may each protrude in different directions from the electrode assembly 100, as illustrated in FIG. 2, but are not limited thereto, and the plurality of electrode tabs 130 may each protrude in parallel in the same direction or in various directions.

The electrode assembly 100 may include an electrode lead 110 that is connected to the electrode tab 130 and supplies electricity to the outside of the secondary battery B. The electrode lead 110 may be connected to the electrode tab 130 by spot welding or the like.

The electrode assembly 100 may include an insulation portion 120 surrounding a portion of the electrode lead 110. The insulation portion 120 may be positioned to correspond to a position where side portions 220 to be described later are fused. When the side portions 220 facing each other are fused together, the insulation portion 120 may be positioned between the side portions 220 to allow the electrode lead 110 to be bonded to the pouch. And, the insulation portion 120 may prevent electricity generated from the electrode assembly 100 from flowing to the pouch through the electrode lead 110 and maintain the sealing of the pouch. Therefore, this insulation portion 120 may be made of a non-conductive material that does not conduct electricity well. For example, the insulation portion 120 may be an insulation tape that is easy to be attached to the electrode lead 110 and has a relatively thin thickness. However, the present disclosure is not limited thereto, and various members may be used as long as the electrode lead 110 may be insulated.

The electrode tab 130 configured to have a positive polarity may be referred to as a positive electrode tab, and the electrode tab 130 configured to have a negative polarity may be referred to as a negative electrode tab. And, the electrode lead 110 configured to have a positive polarity may be referred to as a positive electrode lead, and the electrode lead 110 configured to have a negative polarity may be referred to as a negative electrode lead. The electrode lead 110 may have one end connected to the electrode tab 130 and the other end protruding outward from the pouch. That is, the electrode lead 110 may include a positive electrode lead having one end connected to the positive electrode tab and extending in a direction where the positive electrode tab protrudes, and a negative electrode lead having one end connected to the negative electrode tab and extending in a direction where the negative electrode tab protrudes. Meanwhile, both the positive electrode lead and the negative electrode lead may have the other ends protruding outward from the pouch. Accordingly, the positive electrode lead and the negative electrode lead may supply electricity generated inside the electrode assembly 100 to the outside. Additionally, the positive electrode tab and the negative electrode tab may each extend in various directions.

The positive electrode lead and the negative electrode lead may be made of different materials. The positive electrode lead may be made of the same aluminum material as the positive electrode current collector, and the negative electrode lead may be made of the same copper material or nickel-coated copper material as the negative electrode current collector. And, a portion of the electrode lead 110 protruding outward from the pouch may be a terminal portion and may be electrically connected to an external terminal.

A pouch film forming a pouch, which is an example of the battery case 200, may include a plurality of layers. The pouch film may include a sealant layer and a barrier layer positioned on an outer side of the sealant layer. The pouch film may include a surface protection layer positioned on an outer side of the barrier layer. At this time, the sealant layer may have a polymer material such as polypropylene, the barrier layer may have a metal material such as aluminum, and the surface protection layer may have a polymer material such as nylon. At this time, the fusion to be described later may mean that the pouch films facing each other are coupled as the sealant layers facing each other are melted.

The pouch may be made of a highly flexible material to accommodate the electrode assembly 100 therein. When a flexible pouch film is drawn and molded using a punch (not shown) or the like, a portion thereof may be stretched to form a receiving portion 210 having an electrode receiving space 210S in the form of a pocket, thereby manufacturing the pouch. The pouch may accommodate and seal the electrode assembly 100 so that a portion of the electrode lead 110 is exposed.

When molding the receiving portion 210 in the pouch film, only one receiving portion 210 may be formed in one pouch film, but the present disclosure is not limited thereto, and two receiving portions 210 may be drawn and molded adjacent to each other in one pouch film. Then, two neighboring receiving portions 210 may be formed. Each of the receiving portions 210 may have the same depth, but the present disclosure is not limited thereto, and each of the receiving portions 210 may have a different depth. After the electrode assembly 100 is accommodated in one receiving portion 210, the pouch may be folded around an axis so that another receiving portion 210 faces the receiving portion 210. Accordingly, another receiving portion 210 may accommodate the electrode assembly 100 from an upper side. Since two receiving portions 210 accommodate one electrode assembly 100, an electrode assembly 100 that is thicker than when there is only one receiving portion 210 may be accommodated. Additionally, since the pouch is folded, each of the side portions 220 is integrally connected to form a folding portion 223, and thus when a sealing process is performed later, the number of sides to be sealed may be reduced. Therefore, the process speed may be improved, and the number of sealing processes may be reduced. For convenience of description, the battery case 200 to be described later is described assuming that two receiving portions 210 are formed in one pouch film.

The side portion 220 may include a lead sealing portion 221 configured to be positioned corresponding to the electrode lead 110 and a degassing portion 222 connected to the lead sealing portion 221. The lead sealing portion 221 may be a part of the side portion 220 that is formed adjacent to the electrode lead 110 side. The lead sealing portion 221 may extend in the width direction of the electrode lead 110. The lead sealing portion 221 may be sealed by fusing. Thereafter, the electrolyte may be injected into the electrode receiving space 210S through the degassing portion 222 that is not yet sealed, and the degassing portion 222 may be sealed by fusing. Then, an activation process may be performed, and when the gas generated through the activation process is moved into the degassing portion 222, a degassing process for removing the remaining gas may be performed. After sealing the degassing portion 222 again, a trimming process may be performed to cut unnecessary parts so that the degassing portion 222 has a predetermined width. Then, as illustrated in FIG. 1, the degassing portion 222 may be folded to form the folding portion 223 to reduce the width.

At this time, FIG. 3 illustrates that the electrode assembly 100 according to an embodiment of the present disclosure is accommodated in the battery case 200, and the ends of the battery case 200 positioned at the upper and lower sides based on FIG. 3 are fused to form the lead sealing portion 221. The secondary battery B as illustrated in FIG. 3 may be subjected to an activation process.

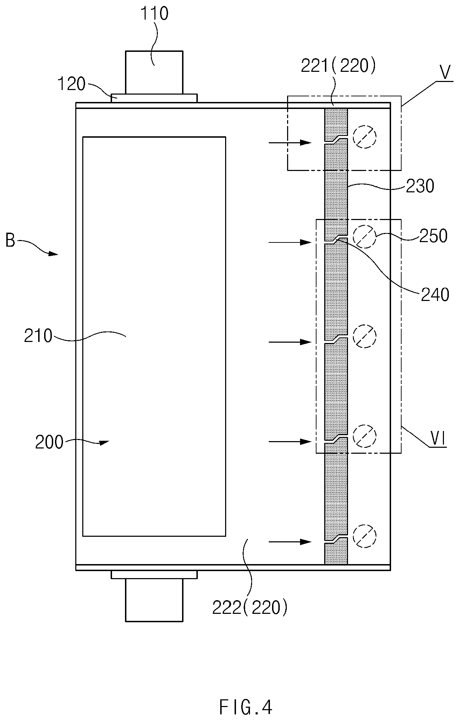

The subsequent process will be described below with reference to FIGS. 4 to 6.

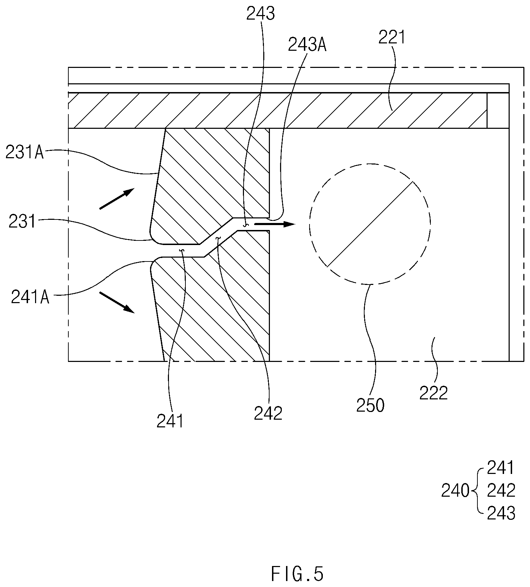

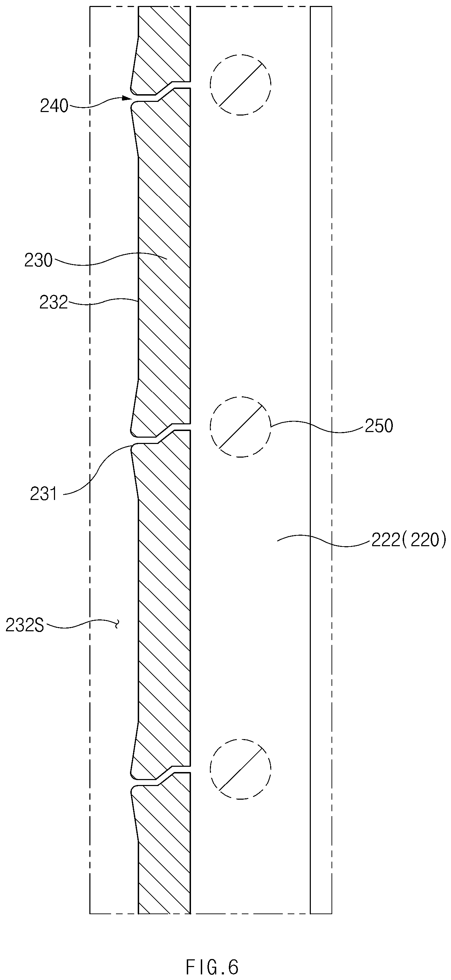

FIG. 4 is a plan view illustrating that a sealing portion 230 is formed in the battery case 200 of the secondary battery B illustrated in FIG. 3. FIG. 5 is an enlarged view illustrating part V of FIG. 4. FIG. 6 is an enlarged view illustrating part VI of FIG. 4.

The sealing portion 230 according to an embodiment of the present disclosure will be described with reference to FIGS. 4 to 6.

As described above, the battery case 200 may include a receiving portion 210 that accommodates the electrode assembly 100 together with the electrolyte and/or a side portion 220 extending from the receiving portion 210.

At this time, the side portion 220 may include a cut portion 250 formed adjacent to an end of the side portion 220 to discharge gas within the receiving portion 210. During the activation process of the secondary battery B, gas may be generated by the reaction of the electrode assembly 100 with the electrolyte. Since the gas may adversely affect the electrical characteristics of the secondary battery B, it may need to be removed. At this time, based on FIG. 4 in the activation process, the left side of the battery case 200 may be covered by the folding portion 223, and the upper and lower sides thereof may be sealed by the lead sealing portion 221. The right side of the battery case 200 may also be sealed. In other words, unlike that illustrated in FIG. 4, the end of the degassing portion 222 may be fused to prevent gas generated in the receiving portion 210 from being discharged through the end of the degassing portion 222. The fusion of the end of the degassing portion 222 may be to prevent leakage of the electrolyte, as described later. At this time, the above-described cut portion 250 may be formed to facilitate the discharge of the gas. The cut portion 250 may be formed by cutting a part of the degassing portion 222 by drawing a knife or the like in one direction as illustrated in the drawing, but the cut portion 250 may be formed as a hole so that the gas may be discharged through the cut portion 250 defined as a hole. In addition, the arrows illustrated in FIG. 4 may indicate the direction of movement of the gas. The gas may escape toward the right side that is not sealed. In other words, the gas may be discharged from the inside of the receiving portion 210 to the outside of the secondary battery B through the degassing portion 222.

Furthermore, the idea of the present disclosure is not limited thereto, and the right end of the degassing portion 222 may be open without being sealed. However, for convenience of description, the battery case 200 to be described later is described assuming that the end of the degassing portion 222 is fused during the activation process and the degassing process.

However, while the gas generated by the activation process is moving, the electrolyte positioned within the receiving portion 210 may also move toward the cut portion 250 along with the movement of the gas. Since the amount of the electrolyte accommodated in the receiving portion 210 in the secondary battery B corresponds to its electrical capacity, there is a need to prevent leakage of the electrolyte. To this end, the secondary battery B may include the sealing portion 230 positioned between the cut portion 250 and the receiving portion 210 to prevent the electrolyte from moving to the cut portion 250 while the gas is discharged to the cut portion 250.

At this time, when the sealing portion 230 is connected to the lead sealing portions 221 positioned at the upper and lower sides, it may be difficult for the gas generated by the electrode assembly 100 to be discharged to the outside. To prevent the electrolyte from moving toward the cut portion 250 while gas moves through the cut portion 250, a plurality of sealing portions 230 may be provided, and a gas discharge flow path 240 may be formed between the plurality of sealing portions 230 to allow the gas to be discharged. The gas discharge flow path 240 may have a cross-sectional area that allows gas to pass through and makes it difficult for the electrolyte to move.

As illustrated in FIG. 4, the plurality of sealing portions 230 may be arranged in a direction parallel to the long side of the receiving portion 210. If the gas discharge flow paths 240 are provided in plurality, the plurality of gas discharge flow paths 240 may also be arranged in a direction parallel to the long side of the receiving portion 210. Since the gas discharge flow path 240 extends in a direction similar to the direction in which the gas moves in the receiving portion 210, the gas may be easily discharged.

The plurality of sealing portions 230 may be formed by fusing the side portions 220. As mentioned above, the pouch film may have a sealant layer on the inner side, and the sealant layer may melt when heat is applied. When the sealant layers positioned on the inner sides of the pouch films facing each other are heated and pressurized, they may be fused to each other to form a plurality of sealing portions 230. Accordingly, gas may be prevented from moving through the plurality of sealing portions 230. Of course, the plurality of sealing portions 230 may be formed by providing a separate block, rather than fusing the side portions 220. However, for convenience of description, the present disclosure assumes and describes that the plurality of sealing portions 230 are formed by fusing the side portions 220.

For reference, the plurality of sealing portions 230 may not all have the same length, and may not be connected to the lead sealing portion 221 unlike that illustrated in FIG. 5. Accordingly, the gas discharge flow path 240 may be formed between the lead sealing portion 221 and the adjacent sealing portion 230. However, for convenience of description, it is assumed and described that the sealing portion 230 adjacent to the lead sealing portion 221 is connected to the lead sealing portion 221.

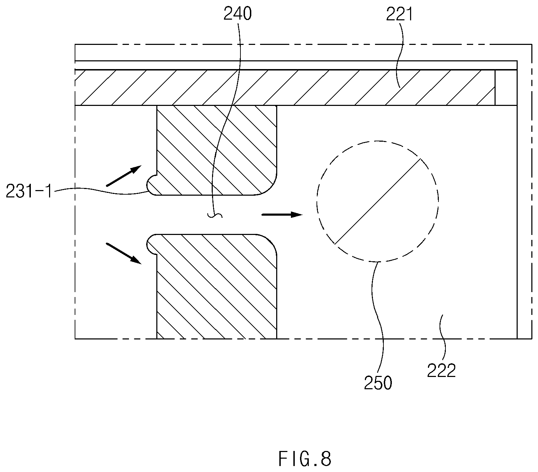

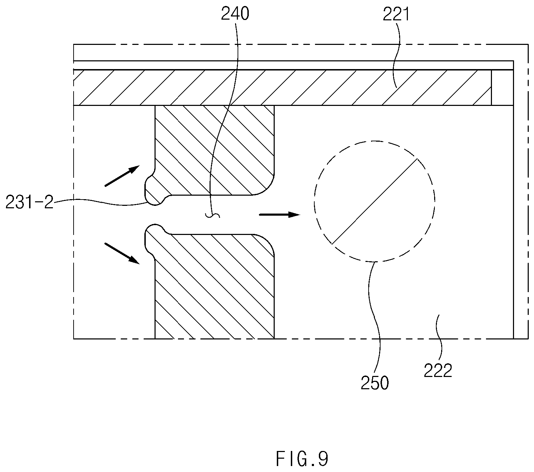

However, the electrolyte may be a fluid, and thus may move to the cut portion 250 through the gas discharge flow path 240. To prevent this, as illustrated in FIG. 6, the sealing portion 230 may include an inflow prevention portion 231 positioned adjacent to an inlet 241A of the gas discharge flow path 240 and extending toward the receiving portion 210 to prevent the electrolyte from flowing into the gas discharge flow path 240. The inflow prevention portion 231 may function to prevent the movement of the electrolyte entering the gas discharge flow path 240. In particular, if a part of the gas discharge flow path 240 is blocked as illustrated in FIGS. 8 or 9 as another embodiment, it may be difficult for the electrolyte to flow into the gas discharge flow path 240 from a direction other than the direction entering from the front or rear of the gas discharge flow path 240. Even when the inflow prevention portion 231 is smoothly connected to an adjacent part as illustrated in FIG. 5, it may be difficult to prevent the electrolyte from flowing into the gas discharge flow path 240 as dramatically as the embodiments illustrated in FIGS. 8 and 9, but the inflow prevention portion 231 may nevertheless make it difficult for the electrolyte to be directed toward the gas discharge flow path 240. In particular, the fact that the inflow prevention portion 231 extends toward the receiving portion 210 may mean that it extends in a direction opposite to the direction of movement of the electrolyte moving in the receiving portion 210. Therefore, the extension direction of the sealing portion 230 is a direction that impedes the movement of the electrolyte, and thus may impede the movement of the electrolyte. Furthermore, the fact that the inflow prevention portion 231 extends toward the receiving portion 210 may mean that it extends toward the receiving portion 210 than the adjacent part of the inflow prevention portion 231. The electrolyte facing the inflow prevention portion 231 may be induced to move to a part that is not closer to the receiving part 210 than the inflow prevention portion 231 that is positioned adjacent to the inflow prevention portion 231 while contacting the inflow prevention portion 231. If the electrolyte moves in a direction away from the gas discharge flow path 240 in the inflow prevention portion 231, a flow in that direction may be formed, thereby increasing the likelihood that the following electrolyte will also flow in a similar direction to the preceding electrolyte.

Furthermore, as illustrated in FIG. 6, each of the plurality of sealing portions 230 may include a sealing portion body 232 that supports the inflow prevention portion 231 and forms a concave guide space 232S in a direction away from the receiving portion 210 to guide the electrolyte together with the inflow prevention portion 231. Accordingly, the electrolyte that meets the inflow prevention portion 231 may move to the guide space 232S. The guide space 232S may include a smooth curved surface or a straight plane to facilitate movement of the electrolyte.

As illustrated in FIG. 5, the inflow prevention portion 231 may have an inclined surface 231A that is inclined in a direction away from the receiving portion 210 with respect to a direction away from the gas discharge flow path 240. Accordingly, the electrolyte that meets the inflow prevention portion 231 may smoothly move away from the gas discharge flow path 240 along the inclined surface 231A. By providing the inclined surface 231A, the inflow prevention portion 231 may be formed longer along the extension direction of the sealing portion 230 than the case where the inclined surface 231A is not provided. In particular, when compared with the inflow prevention portion 231 illustrated in FIG. 8 as another embodiment, the inflow prevention portion 231 illustrated in FIG. 5 may be provided more smoothly and to meet more electrolyte. Being able to smoothly move the electrolyte may mean that turbulence in the movement of the electrolyte may be prevented or that the force impeding the movement may be minimized. Being able to meet more electrolyte may mean that more electrolyte may be moved into the guide space 232S of the sealing portion 230.

The inclined surface 231A is depicted as a straight line in FIG. 5, but it may be implemented as a curved surface whose slope becomes steeper as moving farther away from the receiving portion 210, a curved surface whose slope becomes narrower as moving farther away from the receiving portion 210, or a surface having an inflection point and various changes in curvature. However, for convenience of description, the present disclosure assumes and describes that the inclined surface is a straight line as in FIG. 5.

In addition, the inflow prevention portions 231 may be provided to be positioned at both ends of one sealing portion 230. Since the gas discharge flow path 240 may be formed between both ends of one sealing portion 230 and adjacent sealing portions 230, a pair of inflow prevention portions 231 may be provided at both ends of one sealing portion 230 to prevent electrolyte from flowing into the gas discharge flow path 240. Furthermore, as illustrated in FIG. 5, the sealing portion 230 contacting the lead sealing portion 221 forms one gas discharge flow path 240 with the adjacent sealing portion 230, and thus in this case, the inflow prevention portion 231 may be formed only at one end.

The gas discharge flow path 240 may extend from the inlet 241A to the outlet 243A while being switched in different directions at least once. If the gas discharge flow path 240 extends in only one direction, it may be easier for the electrolyte to move through the gas discharge flow path 240. However, if the extension direction is changed while the gas discharge flow path 240 is moved in the extension direction, friction may occur while the electrolyte moves at the part where the extension direction is changed, or the gas may remain in the corresponding part, thereby increasing the pressure and thus preventing the electrolyte from flowing into the gas discharge flow path 240. Accordingly, it may be even more difficult for the electrolyte to enter the gas discharge flow path 240.

More specifically, the gas discharge flow path 240 may include an inlet flow path 241 extending in a first extension direction from the inlet 241A close to the receiving portion 210. At this time, the inlet flow path 241 may extend perpendicular to the arrangement direction of the plurality of sealing portions 230. The inlet flow path 241 may extend in parallel in the left and right directions based on FIG. 5. The extension direction of the inlet flow path 241 may be similar to the movement direction of the gas discharged from the receiving portion 210. Therefore, the generated gas may be easily introduced into the inlet flow path 241.

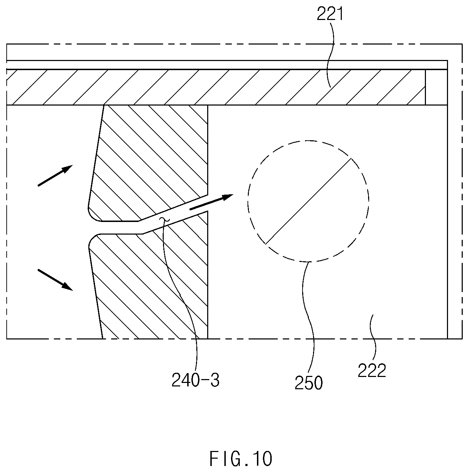

The gas discharge flow path 240 may include a bent flow path 242 extending in a second extension direction different from the first extension direction from the inlet flow path 241 to prevent the electrolyte from moving. The second extension direction may be toward the upper right end, as illustrated in FIG. 5. However, the present disclosure is not limited thereto, the second extension direction may be perpendicular to the first extension direction or may be toward the upper right end. Furthermore, the bent flow path 242 may be directly connected to the outlet 243A of the gas discharge flow path 240, as illustrated in FIG. 10. In this case, the number of bends of the gas discharge flow path 240 may be one. However, for convenience of description, the first embodiment will be described assuming that the bent flow path 242 is not connected to the outlet 243A.

The gas discharge flow path 240 may further include an outlet flow path 243 extending in a third extension direction different from the second extension direction from the outlet 243A positioned on the opposite side of the inlet 241A. The third extension direction may be a direction parallel to the first extension direction, as illustrated in FIG. 5. This may be to facilitate the movement of gas to the cut portion 250. Furthermore, the third extension direction may be different from the cutting direction of the cut portion 250. This is because, when the cutting direction of the cut portion 250 is parallel to the third direction, it may be difficult for the gas to escape through the gap of the cut portion 250.

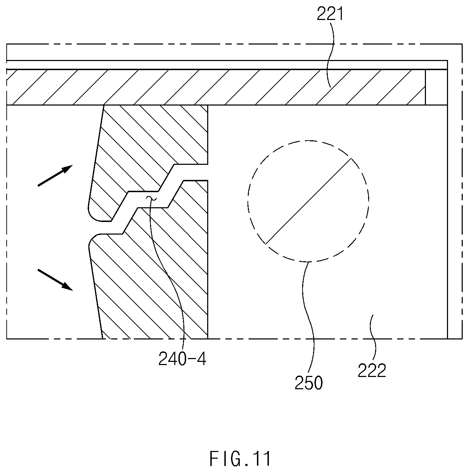

At this time, the outlet flow path 243 may be connected to the bent flow path 242. Accordingly, the number of bends of the gas discharge flow path 240 may be two. Of course, the number of bends may be more than two, as in another embodiment illustrated in FIG. 11.

The cross-sectional area of the outlet flow path 243 may be smaller than the cross-sectional area of the flow path, through which the gas is discharged, formed in the cut portion 250. In other words, the cross-sectional area of the flow path formed in the cut portion 250 may be larger than the cross-sectional area of the outlet flow path 243. This is because, when the cross-sectional area in one flow path increases, the speed of the fluid flowing through the flow path increases, thereby lowering the pressure of the fluid, and accordingly, the following fluid may be better moved toward the corresponding flow path. At this time, the cross-sectional area of the flow path of the cut portion 250 is defined as the cross-sectional area of a hole when the cut portion 250 is the hole, and when formed by cutting as illustrated in FIG. 5, it may be the cross-sectional area of the flow path formed such that the cut line forms the circumference of a semicircle. This may be because the pair of lines facing each other that are cut may each form half of the flow path while spreading out, and ideally, because the flow path may have a cross-sectional area in a circular shape.

The outlet 243A may be adjacent to the cut portion 250. This is because the gas exiting the outlet 243A should be moved directly through the cut portion 250 to minimize the loss of flow energy due to friction during the movement process.

The cut portions 250 may be provided in plurality, and the gas discharge flow path 240 may be provided in plurality to correspond to each of the plurality of cut portions 250. Accordingly, the gas moving through the plurality of gas discharge flow paths 240 may be moved to an adjacent cut portion 250 without having to be moved to another cut portion 250, thereby shortening the moving distance of the gas. Accordingly, the loss of flow energy due to friction of the gas may be minimized.

The further the part of the gas discharge flow path 240 adjacent to the inlet 241A is from the inlet 241A, the smaller cross-sectional area the part may have. Accordingly, the gas flowing into the inlet 241A may be introduced into the gas discharge flow path 240 more easily.

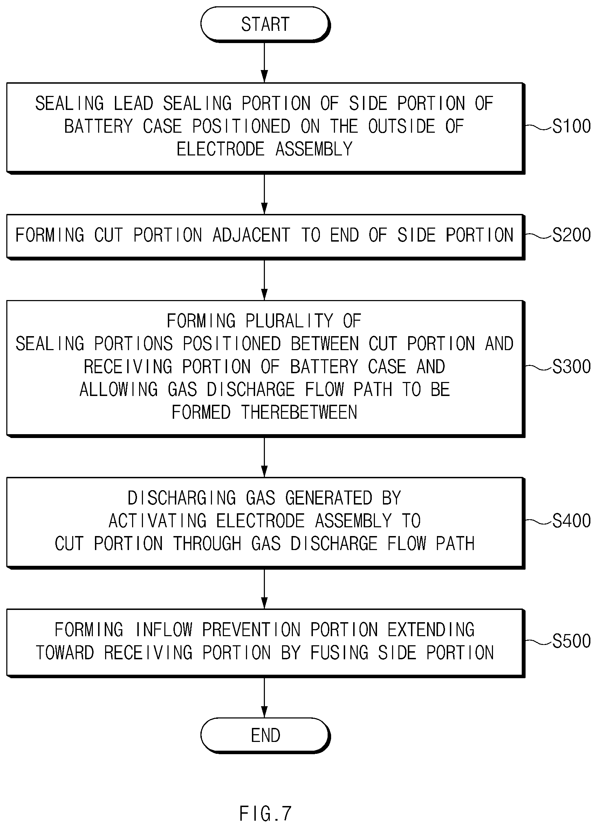

FIG. 7 is a flowchart regarding a method for manufacturing the secondary battery disclosed in FIG. 1.

A method for manufacturing a secondary battery according to a first embodiment of the present disclosure will be described with reference to FIG. 7.

To form the sealing portion 230 that serves as the above, the secondary battery B may be manufactured by the following method.

The method for manufacturing a secondary battery B may include a step S100 of sealing a lead sealing portion 221 of a side portion 220 of a battery case 200 positioned on the outside of an electrode assembly 100. The method for manufacturing a secondary battery B may further include a step S200 of forming a cut portion 250 adjacent to an end portion of the side portion 220. The method for manufacturing a secondary battery B may further include a step S300 of forming a plurality of sealing portions 230 that are positioned between the cut portion 250 and the receiving portion 210 of the battery case 200 and allow a gas discharge flow path 240 to be formed therebetween. The method for manufacturing a secondary battery B may further include a step S400 of discharging gas generated by activating the electrode assembly 100 to the cut portion 250 through the gas discharge flow path 240. The method for manufacturing a secondary battery B may include a step S500 of forming an inflow prevention portion 231 positioned adjacent to an inlet 241A of the gas discharge flow path 240 and protruding toward the receiving portion 210 to prevent the electrolyte from flowing into the gas discharge flow path 240 by fusing the side portion 220, in the plurality of sealing portions 230.

Hereinafter, embodiments different from the first embodiment will be described. Contents in common with the first embodiment will be omitted as much as possible, and the other embodiments will be described focusing on differences. That is, it is obvious that contents not described in the other embodiments may be supplemented by the contents of the first embodiment if necessary.

FIG. 8 is an enlarged view of a secondary battery B according to a second embodiment of the present disclosure.

Referring to FIG. 8, the secondary battery B according to the second embodiment of the present disclosure will be described.

The second embodiment differs from the first embodiment in that the shape of the inflow prevention portion 231-1 is different.

The inflow prevention portion 231-1 in the second embodiment may protrude toward the receiving portion 210.

Furthermore, the gas discharge flow path 240 may be formed such that the part thereof adjacent to the outlet 243A has a larger cross-sectional area toward the outlet 243A. Accordingly, the movement of gas to the cut portion 250 may be facilitated. This idea may still be applied to the remaining other embodiments.

FIG. 9 is an enlarged view of a secondary battery B according to a third embodiment of the present disclosure.

Referring to FIG. 9, the secondary battery B according to the third embodiment of the present disclosure will be described.

The third embodiment differs from the first embodiment in that the shape of the inflow prevention portion 231-2 is different.

The inflow prevention portion 231-2 in the second embodiment may cover at least a portion of the inlet 241A of the gas discharge flow path 240. Accordingly, the electrolyte may be prevented from entering the gas discharge flow path 240.

FIG. 10 is an enlarged view of a secondary battery B according to a fourth embodiment of the present disclosure.

Referring to FIG. 10, the secondary battery B according to the fourth embodiment of the present disclosure will be described.

The fourth embodiment differs from the first embodiment in that the shape of the gas discharge flow path 240-3 is different.

The gas discharge flow path 240-3 in the fourth embodiment may be bent once along the extension direction. Accordingly, the movement of gas may be smoother.

FIG. 11 is an enlarged view of a secondary battery B according to a fifth embodiment of the present disclosure.

Referring to FIG. 11, the secondary battery B according to the fifth embodiment of the present disclosure will be described.

The fifth embodiment differs from the first embodiment in that the shape of the gas discharge flow path 240 is different.

The gas discharge flow path 240-4 in the fifth embodiment may have a number of bends exceeding two. Accordingly, the flow of electrolyte into the gas discharge flow path 240-4 may be more difficult.

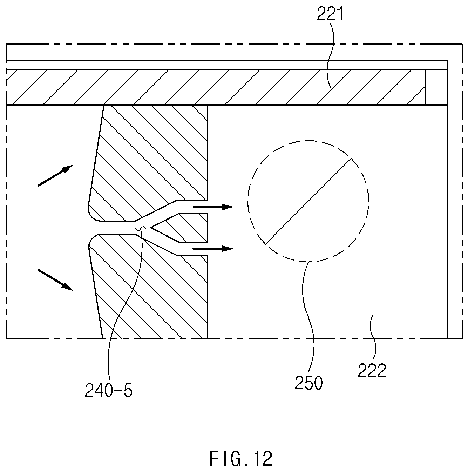

FIG. 12 is an enlarged view of a secondary battery B according to a sixth embodiment of the present disclosure.

Referring to FIG. 12, the secondary battery B according to the sixth embodiment of the present disclosure will be described.

The sixth embodiment differs from the first embodiment in that the shape of the gas discharge flow path 240-5 is different.

The gas discharge flow path 240-5 in the sixth embodiment may be branched. In the case of branching, there may be an effect of substantially increasing the cross-sectional area of the outlet 243A. Furthermore, the branched gas discharge flow path 240-5 may cause turbulent movement of gas at the branch point, which may make it more difficult for the electrolyte to flow into the gas discharge flow path 240-5.

Unless explicitly stated, the embodiments described above may be combined with other embodiments. Alternatively, it should be considered that combinations between embodiments are possible unless one embodiment is expressly limited in combination with another embodiment. Combinations of any embodiment with another embodiment are deemed to be disclosed herein.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

B: Secondary battery
100: Electrode assembly
110: Electrode lead
120: Insulation portion
130: Electrode tab
200: Battery case
210: Receiving portion
210S: Electrode receiving space
220: Side portion
221: Lead sealing portion
222: Degassing portion
223: Folding portion
230: Sealing portion
231: Inflow prevention portion
231A: Inclined surface
232: Sealing portion body
232S: Guide space
240: Gas discharge flow path
241A: Inlet
243A: Outlet
241: Inlet flow path
242: Bent flow path
243: Outlet flow path
250: Cut portion

## Claims

1. A secondary battery comprising:
an electrode assembly; and
a battery case comprising a receiving portion that accommodates the electrode assembly together with an electrolyte and a side portion that extends from the receiving portion,
wherein the side portion comprises:
a cut portion formed adjacent to an end of the side portion to discharge gas within the receiving portion; and
a plurality of sealing portions positioned between the cut portion and the receiving portion to prevent the electrolyte from moving to the cut portion while the gas is discharged to the cut portion,
wherein the plurality of sealing portions comprise:
a gas discharge flow path formed between each of the sealing portions to allow the gas to be discharged, and
an inflow prevention portion positioned adjacent to an inlet of the gas discharge flow path and extending toward the receiving portion to prevent the electrolyte from flowing into the gas discharge flow path.

2. The secondary battery according to claim 1,
wherein each of the plurality of sealing portions comprises a sealing portion body that supports the inflow prevention portion and forms a concave guide space in a direction away from the receiving portion to guide the electrolyte together with the inflow prevention portion.

3. The secondary battery according to claim 1,
wherein the plurality of sealing portions are arranged in a direction parallel to a long side of the receiving portion.

4. The secondary battery according to claim 1,
wherein the inflow prevention portion has an inclined surface inclined in a direction away from the receiving portion with respect to a direction away from the gas discharge flow path.

5. The secondary battery according to claim 1,
wherein the plurality of sealing portions are formed by fusing the side portion.

6. The secondary battery according to claim 1,
wherein the gas discharge flow path extends from the inlet to an outlet with at least one change of direction in a different direction.

7. The secondary battery according to claim 1,
wherein the gas discharge flow path comprises:
an inlet flow path extending in a first extension direction from the inlet close to the receiving portion; and
a bent flow path extending in a second extension direction different from the first extension direction from the inlet flow path to prevent the electrolyte from moving.

8. The secondary battery according to claim 7,
wherein the inlet flow path extends perpendicular to the arrangement direction of the plurality of sealing portions.

9. The secondary battery according to claim 7,
wherein the gas discharge flow path further comprises an outlet flow path extending in a third extension direction different from the second extension direction from the outlet positioned on the opposite side of the inlet.

10. The secondary battery according to claim 9,
wherein the outlet flow path is connected to the bent flow path.

11. The secondary battery according to claim 9,
wherein a cross-sectional area of the outlet flow path is smaller than a cross-sectional area of the flow path that is formed in the cut portion and through which the gas is discharged.

12. The secondary battery according to claim 9,
wherein the outlet is adjacent to the cut portion.

13. The secondary battery according to claim 1,
wherein the cut portions are provided in plurality, and
the gas discharge flow paths are provided in plurality to correspond to each of the plurality of cut portions.

14. The secondary battery according to claim 1,
wherein a part of the gas discharge flow path adjacent to the outlet has a larger cross-sectional area as the part goes toward an outlet.

15. The secondary battery according to claim 1,
wherein a part of the gas discharge flow path adjacent to the inlet has a smaller cross-sectional area as the part goes away from the inlet.

16. A secondary battery comprising:
an electrode assembly; and
a battery case comprising a receiving portion that accommodates the electrode assembly together with an electrolyte and a side portion that extends from the receiving portion,
wherein the side portion comprises:
a cut portion formed adjacent to an end of the side portion to discharge gas within the receiving portion; and
a plurality of sealing portions positioned between the cut portion and the receiving portion to prevent the electrolyte from moving to the cut portion while the gas is discharged to the cut portion,
wherein the plurality of sealing portions comprise a gas discharge flow path formed between each of the sealing portions to allow the gas to be discharged, and
the gas discharge flow path extends from the inlet to an outlet with at least one change of direction in a different direction

17. The secondary battery according to claim 16,
wherein the plurality of sealing portions comprise an inflow prevention portion positioned adjacent to an inlet of the gas discharge flow path and extending toward the receiving portion to prevent the electrolyte from flowing into the gas discharge flow path.

18. The secondary battery according to claim 17,
wherein the plurality of sealing portions comprise a sealing portion body that supports the inflow prevention portion and forms a concave guide space in a direction away from the receiving portion to guide the electrolyte together with the inflow prevention portion.

19. The secondary battery according to claim 16,
wherein the plurality of sealing portions are arranged in a direction parallel to a long side of the receiving portion.

20. A method for manufacturing a secondary battery comprising:
a step of sealing a lead sealing portion of a side portion of a battery case positioned on the outside of an electrode assembly;
a step of forming a cut portion adjacent to an end of the side portion;
a step of forming a plurality of sealing portions that are positioned between the cut portion and a receiving portion of the battery case and allow a gas discharge flow path to be formed therebetween; and
a step of discharging gas generated by activating the electrode assembly to the cut portion through the gas discharge flow path,
further comprising a step of forming an inflow prevention portion positioned adjacent to an inlet of the gas discharge flow path and extending toward the receiving portion to prevent an electrolyte from flowing into the gas discharge flow path by fusing the side portion, in the plurality of sealing portions.
